# EUROPÄISCHE PATENTSCHRIFT

(11) **EP 0 451 608 B1**
(45) Veröffentlichungstag und Bekanntmachung des Hinweises auf die Patenterteilung: **12.07.1995**
(21) Anmeldenummer: 91104760.3
(22) Anmeldetag: 26.03.1991
(51) Int. Cl.: B32B 17/10, G08B 13/04, H05B 3/84, C03C 23/00

(54) **Elektrisch beheizbare Alarmglasscheibe**
Electrically heated alarm glass pane
Vitre d'alarme chauffée électriquement

(30) Priorität: 10.04.1990 DE 4011541
(43) Veröffentlichungstag der Anmeldung: 16.10.1991
(73) Patentinhaber: VEGLA Vereinigte Glaswerke GmbH, D-52066 Aachen (DE); SAINT-GOBAIN VITRAGE, 92400 Courbevoie (FR)
(72) Erfinder: Sistig, Helmut, W-5100 Aachen (DE); Hermens, Ulrich, W-5100 Aachen (DE); Ortmanns, Günter, Dr., W-5100 Aachen (DE); Mattes, Günther, W-5100 Aachen (DE)
(74) Vertreter: Biermann, Wilhelm, Dr.-Ing.

(56) Entgegenhaltungen:
- EP-A- 0 022 279
- US-A- 3 892 947
- US-A- 3 941 975

## Beschreibung

Die Erfindung betrifft eine mit einer transparenten elektrisch leitenden Oberflaechenbeschichtung versehene Glasscheibe.

Es ist bekannt, mit einer elektrisch leitenden transparenten Oberflaechenbeschichtung versehene Glasscheiben als Heizscheiben einzusetzen, wobei die elektrische Leitschicht als Heizwiderstand dient. Da der Flaechenwiderstand der transparenten Leitschichten zwangslaeufig verhaeltnismaessig hoch ist, ist fuer eine wirksame Heizleistung eine verhaeltnismaessig hohe elektrische Spannung erforderlich.

Es ist auch bekannt, mit einer transparenten elektrisch leitenden Oberflaechenschicht versehene Glasscheiben als Alarmglasscheiben zu verwenden, indem die Oberflaechenschicht als Signalgeber an eine elektrische Alarmschaltung angeschlossen wird (DE 37 16 766 A1). Bei dieser bekannten Alarmglasscheibe bildet die Oberflaechenbeschichtung insgesamt in ihrer ganzen Ausdehnung den Signalgeber, und die Kontaktierung der Leitschicht erfolgt an zwei diagonal gegenueberliegenden Ecken der Glasscheibe. Die mit der leitenden Oberflaechenschicht versehene Glasscheibe besteht in diesem Fall aus vorgespanntem Glas und ist mit einer zweiten Glasscheibe zu einem Laminat verbunden.

Der Erfindung liegt die Aufgabe zugrunde, eine mit einer elektrisch leitenden Oberflaechenbeschichtung versehene Glasscheibe bereitzustellen, die gleichzeitig sowohl die Funktion einer Heizscheibe als auch die Funktion einer Alarmglasscheibe erfuellt.

Gemaess der Erfindung wird diese Aufgabe dadurch geloest, dass die mit der Oberflaechenbeschichtung versehene Glasscheibe aus vorgespanntem Glas besteht, dass durch nachtraegliche Entfernung der Oberflaechenbeschichtung entlang einer Trennlinie in einem Rand- oder Eckbereich eine kleine Teilflaeche von der uebrigen grossen Teilflaeche elektrisch abgetrennt ist, dass die grosse Teilflaeche als Heizwiderstand dient und mit Anschlusselektroden und Anschlussleitungen fuer den Anschluss an eine Heizspannung versehen ist und die kleine Teilflaeche als Bruchdetektor dient und Anschlusselektroden und Anschlussleitungen fuer den Anschluss an eine elektrische Alarmschaltung aufweist.

Durch die Kombination der genannten Merkmale wird erreicht, dass der gleichzeitige Betrieb der Glasscheibe als Heizscheibe und als Alarmglasscheibe moeglich ist, ohne dass die eine oder die andere dieser beiden Funktionen hierdurch beeintraechtigt wird. Dadurch, dass als Glasscheibe eine vorgespannte Glasscheibe verwendet wird, die bei einer Zerstoerung bekanntlich insgesamt in kleine Kruemel bzw. Bruchstuecke zerfaellt, genuegt es, wenn nur ein sehr kleiner Teil der Oberflaechenschicht als Bruchdetektor verwendet wird, der an beliebiger Stelle im Randbereich angeordnet sein kann. Beispielsweise genuegt ein schmaler Streifen von einigen Zentimetern Laenge fuer diese Funktion. Die Gesamtflaeche der Oberflaechenschicht wird hierdurch nur um ein vernachlaessigbar kleines Feld verkleinert, so dass die Heizfunktion sich mit Ausnahme dieses kleinen als Bruchdetektor dienenden Bereichs sich ueber die gesamte Oberflaechenschicht erstreckt.

Gleichzeitig werden durch die vollstaendige galvanische Trennung der als Heizwiderstand dienenden Schicht von der als Signalgeber dienenden Schicht Stoerungen der Alarmfunktion vermieden, die andernfalls durch Widerstandsaenderung dieser Schicht infolge starker Erwaermung oder durch die Heizspannung selbst hervorgerufen werden koennen. Auf diese Weise ist es moeglich, mit minimalem Aufwand Glasscheiben herzustellen, die die beiden genannten Funktionen gleichzeitig erfuellen.

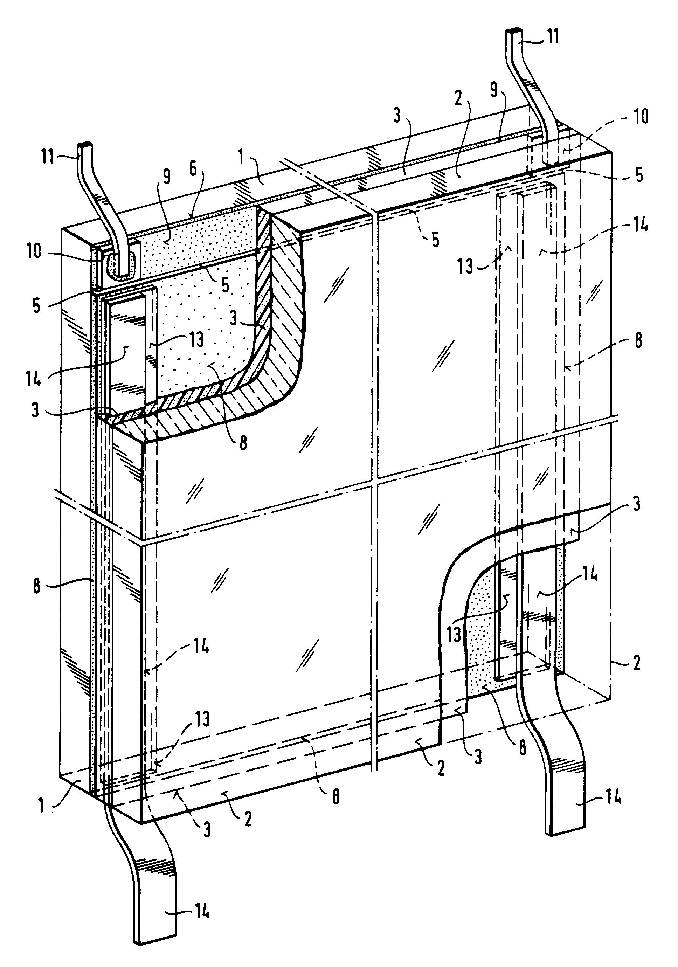

Ein Ausfuehrungsbeispiel der Erfindung wird nachfolgend anhand der einzigen Zeichnung naeher beschrieben.

Bei dem in der Zeichnung dargestellten Ausfuehrungsbeispiel handelt es sich um eine Verbundglasscheibe aus einer thermisch vorgespannten Floatglasscheibe 1, einer nicht vorgespannten Floatglasscheibe 2 und einer thermoplastischen Zwischenschicht 3 aus Polyvinylbutyral.

Die vorgespannte Floatglasscheibe 1 ist auf der an der thermoplastischen Zwischenschicht 3 anliegenden Oberflaeche mit einer elektrisch leitenden transparenten Oberflaechennbeschichtung versehen. Transparente Oberflaechenbeschichtungen mit hinreichender elektrischer Leitfaehigkeit sind bekannt. Sie koennen beispielsweise aus Zinnoxyd bestehen und durch Pyrolyse geeigneter Zinnverbindungen gebildet werden. Als elektrisch leitende transparente Schichten haben sich in besonderer Weise nach dem Verfahren der magnetfeldunterstuetzten Kathodenzerstaeubung bzw. der magnetfeldunterstuetzten reaktiven Kathodenzerstaeubung aufgebrachte Mehrfachschichten erwiesen, deren elektrisch leitende Schicht aus Silber besteht. Unter der Silberschicht und ueber der Silberschicht sind in der Regel weitere Schichten, insbesondere Metalloxidschichten, als Haft- und/oder Schutzschichten und/oder als Entspiegelungsschichten aufgetragen. Transparente Oberflaechenschichten dieser Art haben einen Flaechenwiderstand von 2 bis 12 Ohm pro Quadrateinheit und koennen, je nach Dicke der Silberschicht und je nach den Flaechenabmessungen der Schicht, mit elektrischen Spannungen von 40 bis 220 Volt als Heizwiderstand dienen.

Bei dem dargestellten Ausfuehrungsbeispiel ist mit Hilfe eines geeigneten Lasers die Oberflaechenbeschichtung durch eine Trennlinie 5 unterbrochen, die in einem Abstand von etwa 1 bis 5 cm von der oberen Kante 6 der Glasscheibe 1 verlaeuft. Das Verfahren, Oberflaechenschichten mit Hilfe eines Laserstrahles zu strukturieren, ist als solches bekannt. Die Trennlinie 5 kann so schmal ausgefuehrt sein, dass sie mit dem blossen Auge nur schwer erkennbar ist. Wesentlich ist lediglich, dass eine vollstaendige galvanische Trennung der Oberflaechenschicht erfolgt. Durch die Trennlinie wird die Oberflaechenschicht in eine grosse Teilflaeche 8 und in eine schmale, parallel zur Kante 6 verlaufende Teilflaeche 9 aufgeteilt. Die grosse Teilflaeche 8 wird fuer die Beheizung der Verbundglasscheibe benutzt, und die streifenfoermige Teilflaeche 9 dient als Signalgeber.

Zur Kontaktierung der Oberflaechenbeschichtung sind auf den beiden Endabschnitten der streifenfoermigen Teilflaeche 9 Loetanschlussflaechen 10 aus einer geeigneten Einbrennfarbe vorgesehen. Auf den Loetanschlussflaechen 10 sind Metallbaender bzw. metallische Flachlitzen 11 durch Loeten befestigt und seitlich aus der Verbundglasscheibe herausgefuehrt. Diese Metallbaender bzw. Anschlusslitzen 11 dienen als Anschlussleitungen zu der elektrischen Auswerteschaltung der Alarmanlage.

Auch die grosse Teilflaeche 8 ist auf geeignete Weise kontaktiert. In dem dargestellten Fall erfolgt die Kontaktierung durch Leitsilberstreifen 13 aus einer metallisches Silber enthaltenden Einbrennfarbe, auf die Metallfolienbaender 14 beispielsweise mit einem elektrisch leitenden Kleber oder einem niedrig schmelzenden Lot aufgebracht werden. Die Metallfolienbaender 14, bei denen es sich auch um duenne metallische Flachlitzen handeln kann, sind seitlich aus der Verbundglasscheibe herausgefuehrt und dienen zum Anschluss an die den Heizstrom liefernden Zuleitungen.

Bei dem beschriebenen Ausfuehrungsbeispiel ist die als Bruchdetektor dienende Teilflaeche der Oberflaechenbeschichtung in Form eines geraden Streifens entlang einer Kante der vorgespannten Glasscheibe ausgebildet. Es ist jedoch selbstverstaendlich auch moeglich, die als Bruchdetektor dienende Teilflaeche in beliebiger Gestalt auszufuehren, beispielsweise in Form einer Schleife, und diese Schleife in einem Eckbereich der Glasscheibe anzuordnen. Ferner ist es moeglich, die zur elektrischen Beheizung dienende Teilflaeche ebenfalls mit Hilfe eines Lasers in beliebiger Weise zu strukturieren, um den Flaechenwiderstand der Leitschicht einerseits an die gewuenschte Leistung und andererseits an die zur Verfuegung stehende elektrische Spannung anzupassen.

Wenn die elektrisch leitende Oberflaechenschicht ausreichend witterungsbestaendig ist, was insbesondere bei pyrolythisch aufgebrachten Schichten der Fall ist, kann die erfindungsgemaesse Glasscheibe als monolythische Glasscheibe ausgebildet sein. In der Regel ist es jedoch zweckmaessig, die Oberflaechenbeschichtung durch eine weitere Glasscheibe zu schuetzen. Waehrend bei dem beschriebenen Ausfuehrungsbeispiel die die Oberflaechenschicht schuetzende Glasscheibe mit der die Oberflaechenschicht tragenden Glasscheibe zu einer Verbundglasscheibe verbunden ist, kann diese zweite Glasscheibe stattdessen auch ueber einen Abstandsrahmen mit der die Oberflaechenschicht tragenden Glasscheibe zu einer Isolierglasscheibe vereinigt werden.

## Patentansprüche

1. Mit einer transparenten elektrisch leitenden Oberflaechenbeschichtung versehene Glasscheibe,
**dadurch gekennzeichnet,** dass die mit der Oberflaechenbeschichtung versehene Glasscheibe (1) aus vorgespanntem Glas besteht, dass durch nachtraegliche Entfernung der Oberflaechenbeschichtung entlang einer Trennlinie (5) in einem Rand- oder Eckbereich eine kleine Teilflaeche (9) von der uebrigen grossen Teilflaeche (8) elektrisch abgetrennt ist, dass die grosse Teilflaeche (8) als Heizwiderstand dient und mit Anschlusselektroden (13) und Anschlussleitungen (14) fuer den Anschluss an eine Heizspannung versehen ist, und dass die kleine Teilflaeche (9) als Bruchdetektor dient und Anschlusselektroden (10) und Anschlussleitungen (11) fuer den Anschluss an eine elektrische Alarmschaltung aufweist.

2. Glasscheibe nach Anspruch 1, dadurch gekennzeichnet, dass sie ueber eine thermoplastische Zwischenschicht (3) mit einer weiteren Glasscheibe (2) zu einer Verbundglasscheibe verbunden ist.

3. Glasscheibe nach Anspruch 1, dadurch gekennzeichnet, dass sie ueber einen Abstandsrahmen und Klebe- und Dichtschichten mit einer zweiten Glasscheibe zu einer Isolierglasscheibe verbunden ist.

4. Glasscheibe nach einem der Ansprueche 1 bis 3, dadurch gekennzeichnet, dass die grosse, als Heizwiderstand dienende Teilflaeche der Oberflaechenbeschichtung durch Trennlinien entsprechend der gewuenschten Heizleistung und der zur Verfuegung stehenden elektrischen Spannung unterteilt ist.

5. Glasscheibe nach einem der Ansprueche 1 bis 4, dadurch gekennzeichnet, dass die kleine, als Bruchdetektor dienende Teilflaeche der Oberflaechenbeschichtung die Form einer Schleife aufweist.

## Claims

1. A glass pane provided with an electrically conductive surface coating, characterised thereby that the glass pane (1) provided with the surface coating consists of prestressed glass, that a small part surface (9) is electrically separated from the remaining large part surface (8) by subsequent removal of the surface coating along a separating line (5) in an edge or corner region, that the large part surface (8) serves as a heater resistance and is provided with connecting electrodes (13) and connecting leads (14) for connection to a heater voltage, and that the small part surface (9) serves as a crack detector and has connecting electrodes (10) and connecting leads (11) for connection to an electrical alarm circuit.

2. Glass pane according to claim 1, characterised thereby that it is connected by way of a thermoplastic intermediate layer (3) with a further glass pane (2) to form a compound glass pane.

3. Glass pane according to claim 1, characterised thereby that it is connected by way of a spacer frame and adhesive and sealing layers with a second glass pane to form an insulating glass pane.

4. Glass pane according to one of claims 1 to 3, characterised thereby that the large part surface, which serves as a heater resistance, of the surface coating is divided by separating lines in accordance with the desired heat output and the electrical voltage available.

5. Glass pane according to one of claims 1 to 4, characterised thereby that the small part surface, which serves as a crack detector, of the surface coating has the form of a loop.

## Revendications

1. Vitre pourvue d'un revêtement superficiel transparent, conducteur de l'électricité, caractérisée en ce que la vitre (1) pourvue du revêtement superficiel est en verre trempé, que par l'enlèvement ultérieur du revêtement superficiel suivant une ligne de séparation (5) on sépare électriquement, dans une zone située dans un coin ou le long d'un bord, une petite surface partielle (9) de la surface partielle restante plus étendue (8), que la grande surface partielle (8) sert de résistance chauffante et est pourvue d'électrodes de connexion (13) et de conducteurs de connexion (14) pour la connexion à une tension de chauffage, et que la petite surface partielle (9) sert de détecteur de bris et présente des électrodes de connexion (10) et des conducteurs de connexion (11) pour la connexion à un circuit d'alarme électrique.

2. Vitre suivant la revendication 1, caractérisée en ce que, par l'intermédiaire d'une couche intercalaire thermoplastique (3), elle est unie à une autre vitre (2) pour former un vitrage en verre feuilleté.

3. Vitre suivant la revendication 1, caractérisée en ce que, par l'intermédiaire d'un cadre d'écartement et de couches de matière adhésive et de matière d'étanchéité, elle est unie à une deuxième vitre pour former un vitrage isolant.

4. Vitre suivant l'une quelconque des revendications 1 à 3, caractérisée en ce que la grande surface partielle du revêtement superficiel servant de résistance chauffante est subdivisée par des lignes de séparation en fonction de la puissance de chauffage souhaitée et à la tension électrique disponible.

5. Vitre suivant l'une quelconque des revendications 1 à 4, caractérisée en ce que la petite surface partielle du revêtement superficiel servant de détecteur de bris a la forme d'une boucle.
